# EUROPEAN PATENT APPLICATION

(11) **EP 2 797 044 A1**
(43) Date of publication of application: **29.10.2014**
(21) Application number: 13290091.1
(22) Date of filing: 23.04.2013
(51) Int. Cl.: G06Q 30/02

(54) **Computer-implemented souvenir generation system and method**

(71) Applicant: Amadeus S.A.S., 06410 Biot (FR)
(72) Inventor: Le Marier, Mathieu, 06600 Antibes (FR); Regnault, Julien, 06130 Grasse (FR); Gevrey, Julien, 06700 Saint Laurent du Var (FR)
(74) Representative: Samson & Partner

(57) **Abstract**

A computer-implemented souvenir generation system automatically generates a customizable souvenir document by seamlessly gathering information based on a traveler's own experience. The computer-implemented souvenir generation system may include a souvenir repository, a souvenir customization module that generates customization data and a souvenir delivery module. The system may interface with a reservation system that stores a user's passenger record containing travel-related information. The computer-implemented souvenir generation system may automatically generate a souvenir document based on a user's customization and operation data. The souvenir delivery module may deliver the generated souvenir document based on an occurrence of an associated delivery trigger via a customizable delivery method.

## Description

### TECHNICAL FIELD

The present invention is directed to a system and method that automatically generates and delivers a customizable souvenir document by seamlessly gathering information about a traveler's own experience.

### BACKGROUND

Upon booking a travel reservation a receipt is typically generated which summarizes and is associated with the purchase. This receipt is generally based on static data and is not customizable by the specific customer.

Typical modem travel booking systems utilize passenger records which are associated with and contain information related to specific bookings, such as a booked flight, which are stored in a reservation system. The passenger record may be a passenger name record ("PNR"), and the reservation system may be a global distribution system ("GDS"). A GDS is a computer reservation system typically utilized jointly by airlines in different countries, which includes reservation databases of suppliers in many countries.

Currently, the only item a traveler often has as a souvenir of his or her travel is the receipt (e.g. boarding pass for flyers), which may be printed on a very generic plain format, which provides no individualized personalization based on the traveler's own experience. Many customers want to remember their trips and accordingly, would benefit from the automatic generation of a personalized customizable souvenir document.

### SUMMARY

The computer-implemented souvenir generation system automatically generates a customizable souvenir document by seamlessly gathering dynamic information based on a traveler's own experience. The souvenir document may be for an individual flight, for segments and/or an entire trip, and/for a group of passengers. The system may utilize ancillary services (such as travel reservation systems which are used to book, price and issue travel services, and to subscribe to the souvenir generation service). In one aspect, the system may be integrated with a GDS to provide travel-related data associated with a passenger record from which operation data may be extracted. Accordingly, the system may generate souvenir documents utilizing this operation data.

The system generated souvenir document may be based on dynamic data, and the system may facilitate the integration of operational and traveler-specific customizable data to generate, format and deliver a souvenir document. The souvenir document generation may be automatic as a user may customize parameters of a trigger upon which the souvenir document may be generated. In another aspect, the souvenir document generation may be manual. The souvenir document may be a unique and personalized so as to serve as a traveler's souvenir with regards to a specific trip or portion of a trip reservation. The communication media of the souvenir document may be customizable, as the generated souvenir document may be sent via email or via other types of media.

The computer-implemented souvenir generation system may include a souvenir repository, a souvenir customization module that generates customization data and a souvenir delivery module. The souvenir repository may be a database. The system may also include a document server. The souvenir repository, the souvenir customization module and the souvenir delivery module may be integrated with each other. The system may interface with a reservation system that stores a user's passenger record containing travel-related information.

In one aspect, the computer-implemented souvenir generation system may retrieve a user's operation data associated with travel-related information, which may be contained in the user's passenger record. The system may customize the content, format and communication media of a souvenir document based on the customization data which is provided by the user. The system may store this customization data as well as the user's associated operation data, which may be associated with the user's passenger record, in the souvenir repository.

In another aspect, the computer-implemented souvenir generation system may automatically generate a souvenir document based on a user's customization and operation data. The souvenir delivery module may deliver the generated souvenir document based on an occurrence of an associated delivery trigger via a customizable delivery method. The delivery trigger may be provided by the user or may be system generated. The system generated souvenir document may be generated after a manual request is made by the associated passenger.

A user may customize the communications media by which the system generated souvenir document is sent. The generated souvenir document may be delivered as an email, mobile message (MMS/SMS), social network post, hard-copy print document, and/or laminated card. In another aspect, the computer-implemented souvenir generation system may include a system management module, which may manage the customization and operation data that is stored in the souvenir repository.

The generated souvenir document may be re-delivered after a first delivery. As such, the customization and operation data associated with a specific previously generated souvenir document may be accessed from the souvenir repository and modified. Accordingly, the system may generate and deliver the associated modified souvenir document. The computer-implemented souvenir generation system may facilitate the user customization of the type of souvenir document which the system generates. The system may propose that a customer get a souvenir for each segment of the passenger name record ("PRN") associated with a travel reservation, or for the entire trip routing. The system may also propose that a groupof passengers get a souvenir for the entire group. Accordingly, the system may generate a flight souvenir document which is associated with a single flight for a single passenger, the system may generate a trip souvenir document which is associated with a trip for a single passenger, and the system may generate a group souvenir document which is associated with a group of persons. The travel reservation may be booked, priced and issued as a standard electronic service document ("EMD"), which may be priced accordingly based on whether the souvenir document will be associated with an individual flight, a trip for a single passenger or with a trip for a group of travelers. This pricing may be based on the reservation functionalities of the ancillary services.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The details of one or more embodiments are set forth in the following detailed description of the invention and the accompanying drawings. Other objectives, features, and advantages of the invention will be more readily understood upon consideration of the following Detailed Description of the invention, taken in conjunction with the accompanying drawings, and with the claims.

### DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:
Figure 1 illustrates an exemplary computer-implemented souvenir generation system and its components consisting therein.
Figure 2 provides a flow chart depicting the souvenir generation processing.
Figure 3 provides a visual representation of the souvenir customization module user interface.
Figure 4 provides a visual representation of a system generated souvenir document.
Figure 5 provides a flow chart depicting eligibility checking, souvenir document generation and delivery processing.

### DETAILED DESCRIPTION OF EXEMPLARY EMBODIMENTS

A detailed explanation of the system and method according to the preferred embodiments of the present invention are described below.

The embodiments may take the form of a hardware embodiment, a software embodiment, or an embodiment combining software and hardware. In one embodiment, the present invention takes the form of a computer-program product that includes computer-useable instructions embodied on one or more computer-readable media.

The various souvenir generation techniques, methods, and systems described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

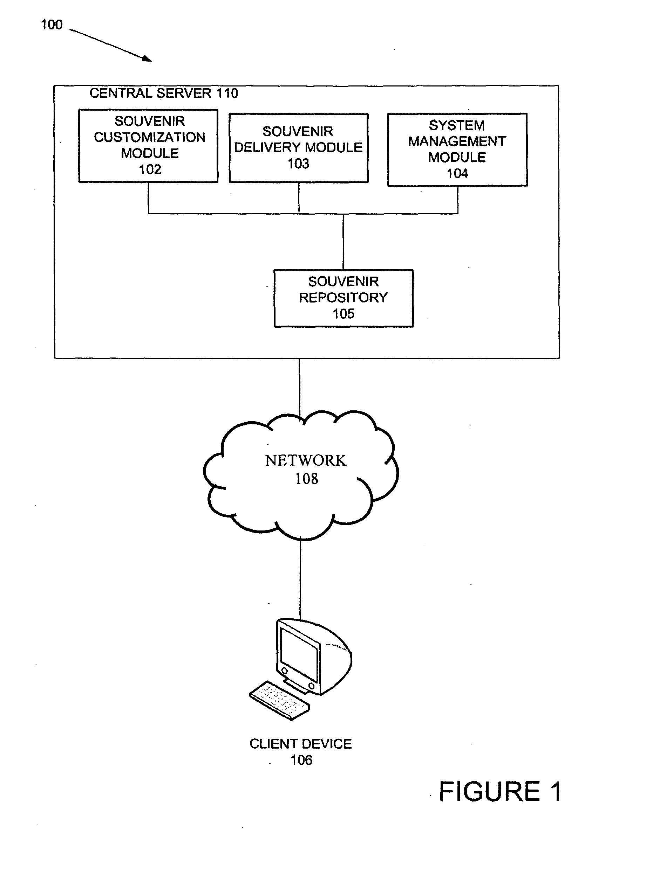

Referring to the souvenir generation system 100 shown in Figure 1, in an embodiment, the centralized server 110, the client device 106, souvenir customization module102, souvenir delivery module 103, system management module 104, and souvenir repository 105 may comprise a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer. In an embodiment, the souvenir customization module 102, the souvenir delivery module 103 and the system management module 104 may be an application program.

In addition, client device 106 may be or can include a desktop computer, a server, a laptop computer or other mobile computing device, a network-enabled cellular telephone (with or without media capturing/playback capabilities), wireless email client, or other client, machine or device to perform various tasks including Web browsing, search, electronic mail (email) and other tasks, applications and functions.

The general-purpose computer may include a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network, such as network 108, include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

In one embodiment, network 108 can also include a communications interface that allows software and data to be transferred between client device 106, central server 110, and the other components shown in system 100. The souvenir customization module 102, souvenir delivery module 103, and system management module 102 may also be stand-alone components that can communicate with each other, the centralized server 110, and/or the client device over network 108. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

Computer programs which may be associated with applications of the souvenir customization module 102, souvenir delivery module 103, and system management module 104 (also called computer control logic) may be stored in the main memory or secondary memory. Such computer programs can also be received via a communications interface. Such computer programs, when executed, may enable the computer system to perform the features as discussed herein. In particular, the computer programs, when executed, may enable the processor to perform the described techniques. Accordingly, such computer programs may represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

In another embodiment, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server. In this embodiment, it is envisioned that a client computer system, which may be the client device 106, may interact with a browser to select a particular URL, which in turn may cause the browser to send a request for that URL or page to the server identified in the URL. Typically, the server may respond to the request by retrieving the requested page and transmitting the data for that page back to the requesting client computer system, which may be the client device 106 (the client/server interaction may be typically performed in accordance with the hypertext transport protocol or HTTP). The selected page may then be displayed to the user on the client's display screen. The client can then cause the server containing a computer program to launch an application, for example, to perform an analysis according to the described techniques. In another implementation, the server can download an application to be run on the client to perform an analysis according to the described techniques.

Referring to Figure 1, the computer-implemented souvenir generation system may include a souvenir repository 105, a souvenir customization module 102 that generates customization data and a souvenir delivery module 103. The souvenir repository 105 may be a database. The system 100 may also include a document server. The souvenir repository 105, the souvenir customization module 102 and the souvenir delivery module 103 may be integrated with each other. The system 100 may interface with a reservation system that stores a user's passenger record containing travel-related information.

The computer-implemented souvenir generation system may retrieve a user's operation data associated with travel-related information, which may be contained in the user's passenger record. The computer-implemented souvenir generation system 100 may utilize web services and applications and may interface with external travel reservation systems and other third party services. The system may customize the content, format and communication media of a souvenir document based on the customization data which is provided by the user. The system may store this customization data as well as the user's associated operation data, which may be associated with the user's passenger record, in the souvenir repository 105. The souvenir customization module 102 may generate the customization data, and may be accessed via a user interface for the customer.

The computer-implemented souvenir generation system may automatically generate a souvenir document based on a user's customization and operation data. The souvenir delivery module 103 may deliver the generated souvenir document based on an occurrence of an associated delivery trigger via a customizable delivery method. The delivery trigger may be provided by the user or may be system generated. The system generated souvenir document may be generated after a manual request is made by the associated passenger.

A user may customize the communications media by which the system generated souvenir document is sent. The generated souvenir document may be delivered as an email, mobile message (MMS/SMS), social network post, hard-copy print document, and/or laminated card. In another embodiment, the computer-implemented souvenir generation system may include a system management module 104, which may manage the customization and operation data that is stored in the souvenir repository 105. The generated souvenir document may be re-delivered after a first delivery. The customization and operation data associated with a specific previously generated souvenir document may be accessed from the souvenir repository 105 and modified. The system may generate and deliver the associated modified souvenir document. The computer- implemented souvenir generation system may facilitate the user customization of the type of souvenir document which the system generates. The system may generate a flight souvenir document which is associated with a single flight for a single passenger, the system may generate a trip souvenir document which is associated with a trip for a single passenger, and the system may generate a group souvenir document which is associated with a group of persons.

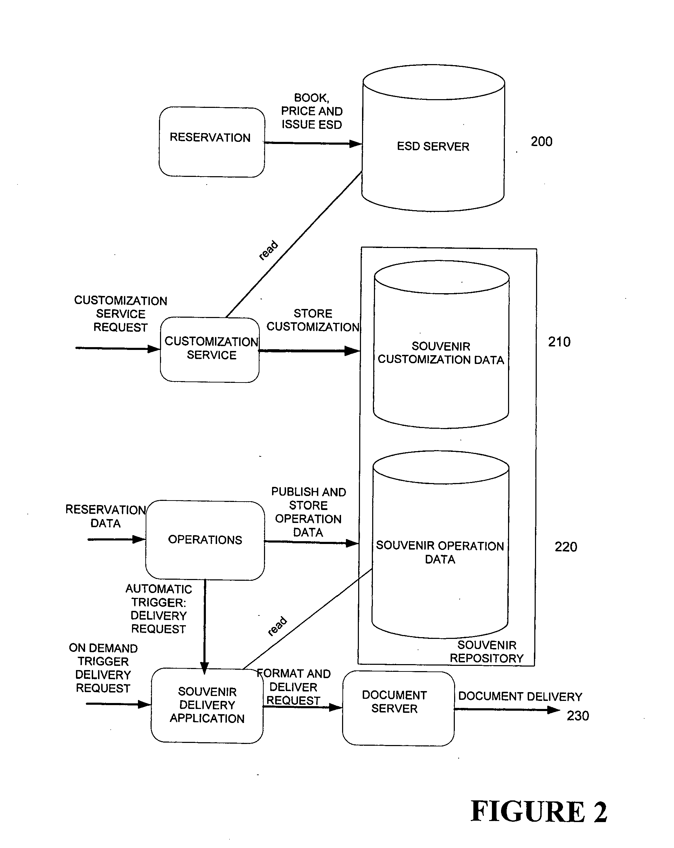

Referring to Figure 2, a customer may subscribe to a service associated with the computer-implemented souvenir generation system 100. Upon the booking and pricing of a travel reservation and issuance of a travel service (flight, entire trip, group trip, hotel reservation), an electronic service document may be issued to a customer 200. At issuance, a souvenir number may be allocated to the electronic service document. The system may perform eligibility checks to determine the status of the electronic service document. The status of the electronic service document may be open or consumed, and may remain open during the customization processing.

Upon performing the eligibility check, if system determines that the electronic service document is in an open status, the customer may access the souvenir customization module 102 via a customization application interface 210. Web services may be utilized by a customer to customize the souvenir document, and the web services may be triggered from any user interface. The system may access the souvenir number or a passenger record locator number associated with the electronic service document that has been issued. The user may customize the delivery trigger, which may be automatic or manual. An automatic delivery trigger may be an automatic push to the customer based on the occurrence of some event (e.g. flight check-in, flight departure, flight arrival). The delivery trigger may be manual, where a customer will manually request the system generation of an associated souvenir document.

The customer may also customize the background image of the souvenir document, as the passenger may upload a specific image to be incorporated, and to be utilized in the formatting process. The customer may also select the image from a repository of images saved by the system and/or managed by an airline. The service provider may also provide a specific template/layout for the souvenir document. The customer may also customize the data to be printed on the souvenir document, as well as the delivery options and format of the generated souvenir document. The generated souvenir document may be delivered as an email, mobile message (MMS/SMS), social network post, hard-copy print document, and/or laminated card.

The system may store and archive the customization and operation data in the souvenir repository 105. The customization data may be the data selected by a customer on a customization service to be used for document formatting and delivery purposes of the souvenir document which will be generated by the system 210. The operation data is the data that is gathered from operations (e.g. business data) to fill in the souvenir document. Accordingly, the system may store and archive the customization and operation data in the souvenir repository 220. The operation data may be retrieved from the operations system. The operation data may include: board on and board off cities of a flight; the weather of the day of travel, the effective departure and arrival times, any delay/problem/unusual event, the number of boarded passengers on a flight, the number of remaining seats on a flight; the seat number of a passenger, the meal a passenger was served on a flight, the type of aircraft; the flight duration, the flight class, and the barcode associated with an electronic service document.

The computer-implemented souvenir generation system may deliver the system generated souvenir document based on a delivery trigger 230. The delivery request, which initiates the validation processing, may be automatic or manual. The delivery may be automatic, such that the passenger may receive the system generated souvenir document automatically after the processing of the system has detected that the trigger event has occurred (e.g., the customer has flown). The souvenir document may also be issued after the manual request from the passenger. The system may request validation, and if the validation is successful, the system may retrieve souvenir customization and souvenir operation data from souvenir repository 105, from which the souvenir document is generated. The souvenir document may be formatted and delivered taking into account souvenir customization data and souvenir operation data. The system generation of souvenir document may take into consideration many parameters (e.g. whether the customer has traveled, time to be respected (if any) before flight souvenir issuance when notification that passenger has travelled has been received).

The status of the electronic service document status may remain open during the customization processing. After the souvenir document has been delivered, the electronic service document status may be set to a completed status. Depending on the delivery method of the souvenir document (e.g. electronic vs. hard copy), the document may be re-delivered after a first delivery, but the electronic service document may no longer eligible to customized and deliver new souvenir documents.

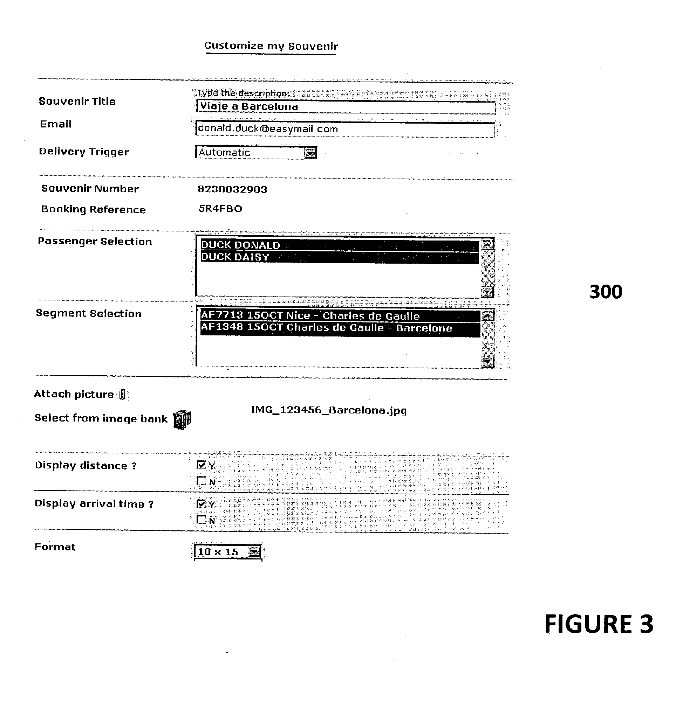

Referring to Figure 3, the customer may access the souvenir customization module 102 via a customization application interface 300. Web services may be utilized by a customer to customize the souvenir document, and the web services may be triggered from any user interface. The system may access the souvenir number or a passenger record locator number associated with electronic service document that has been issued. The system may perform eligibility checks to determine the status of the electronic service document. The status of the electronic service document status may remain open during the customization processing. The user may customize the delivery trigger associated with a system generated souvenir document, which may be automatic or manual. An automatic delivery trigger may be an automatic push to the customer based on the occurrence of some event (e.g. flight check-in, flight departure, flight arrival). The delivery trigger may be manual, where a customer will manually request the system generation of an associated souvenir document.

The customer may also customize the format of the souvenir document, and its background image. The passenger may upload a specific image to be incorporated to be utilized in the formatting process. The customer may also select the image from a repository of images saved by the system and/or managed by an airline. The service provider may also provide a specific template/layout for the souvenir document. The customer may also customize the data to be printed on the souvenir document (e.g. passenger selection, segment selection, distance, arrival time), as well as the delivery options and format of the generated souvenir document. The generated souvenir document may be delivered as an email, mobile message (MMS/SMS), social network post, hard-copy print document, and/or laminated card.

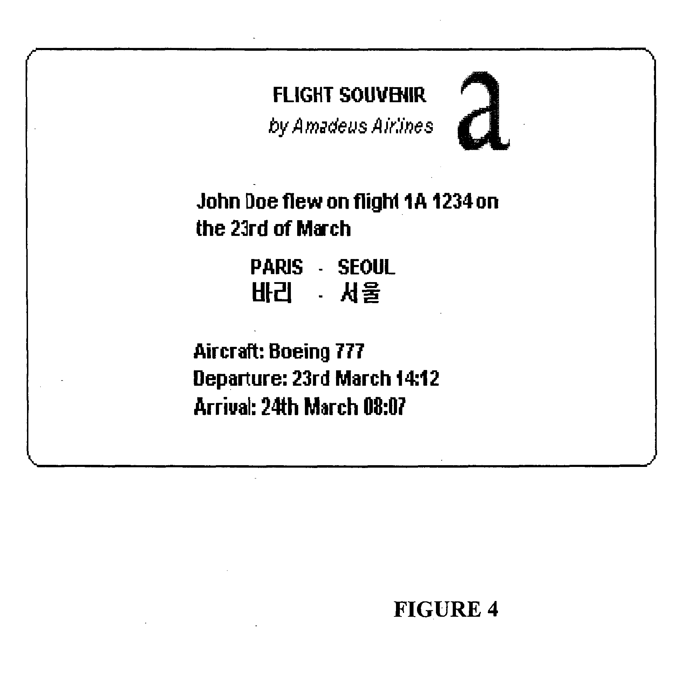

Referring to Figure 4, the computer-implemented souvenir generation system may automatically generate a souvenir document based on a user's customization and operation data 400. The generated souvenir document may be delivered as an email, mobile message (MMS/SMS), social network post, hard-copy print document, and/or laminated card.

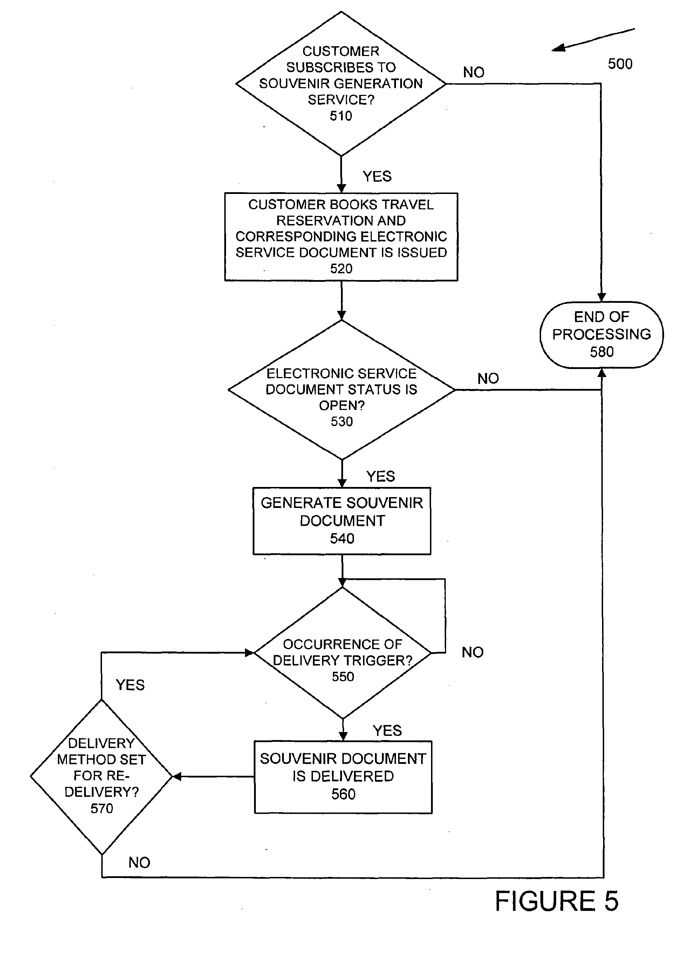

Referring to Figure 5, the computer implemented souvenir generation system processing 500 may involve determining whether a customer has subscribed to a service associated with the computer-implemented souvenir generation system. If a customer has subscribed to the souvenir service, the souvenir generation processing may be initiated when a customer books a travel reservation 520. Upon the booking and pricing of a travel reservation and issuance of a travel service (flight, entire trip, group trip, hotel reservation), an electronic service document may be issued to a customer 520. At issuance, a souvenir number may be allocated to the electronic service document.

The system may perform eligibility checks to determine the status of the electronic service document 530. The status of the electronic service document may be open or consumed, and may remain open during the customization processing. Upon performing the eligibility check, if system determines that the electronic service document is in an open status, the system may generate a souvenir document based on a user's customization and operation data 540. The system may deliver the generated souvenir document based on the occurrence of a delivery trigger 550. The generated souvenir document may be re-delivered after a first delivery 570.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A computer-implemented souvenir generation system comprising:
a souvenir repository;
a souvenir customization module that generates customization data; and
a souvenir delivery module;
wherein the souvenir generation system:
interfaces with a reservation system that stores a user's passenger record containing travel-related information;
retrieves a user's operation data associated with said travel-related information;
customizes content, format and communications media of a souvenir document based on the customization data;
stores the user's customization data and operation data associated with said passenger record in the souvenir repository; and
automatically generates the souvenir document based on said user's customization and operation data;
wherein the souvenir delivery module delivers said generated souvenir document based on an occurrence of an associated delivery trigger; and
wherein the souvenir repository, the souvenir customization module and the souvenir delivery module are integrated with each other.

2. The computer-implemented souvenir generation system of claim 1 wherein the system delivers the generated souvenir document after a manual request is made by the associated passenger.

3. The computer-implemented souvenir generation system of claim 1 wherein the generated souvenir document may be delivered as an email, mobile message, social network post, hard-copy print document, and/or laminated card.

4. The computer-implemented souvenir generation system of claim 1, wherein the system comprises a document server.

5. The computer-implemented souvenir generation system of claim 1, wherein the system comprises a system management module that manages the customization and operation data that is stored in the souvenir repository.

6. The computer-implemented souvenir generation system of claim 1, wherein the generated souvenir document may be re-delivered after a first delivery.

7. The computer-implemented souvenir generation system of claim 6, wherein:
the customization and operation data associated with a specific previously generated souvenir document may be accessed from the souvenir repository and modified; and
the system generates and delivers the associated modified souvenir document.

8. The computer-implemented souvenir generation system of claim 1, wherein the generated souvenir document is a flight souvenir document which is associated with a single flight for a single passenger.

9. The computer-implemented souvenir generation system of claim 1, wherein the generated souvenir document is a trip souvenir document which is associated with a trip for a single passenger.

10. The computer-implemented souvenir generation system of claim 1, wherein the generated souvenir document is a group souvenir document which is associated with a group of persons.

11. A souvenir generation method comprising:
interfacing with a reservation system that stores a user's passenger record containing travel-related information;
retrieving a user's operation data associated with said travel-related information;
generating customization data;
customizing content, format and communications media of a souvenir document based on the customization data;
storing the user's customization data and operation data associated with said passenger record in a souvenir repository;
automatically generating the souvenir document based on said user's customization and operation data; and
delivering said generated souvenir document based on an occurrence of an associated delivery trigger.

12. The souvenir generation method of claim 11 comprising delivering the generated souvenir document after a manual request is made by the associated passenger.

13. The souvenir generation method of claim 11 comprising delivering the generated souvenir document as an email, mobile message, social network post, hard-copy print document, and/or laminated card.

14. The souvenir generation method of claim 11, comprising managing the customization and operation data that is stored in the souvenir repository.

15. The souvenir generation method of claim 11, comprising re-delivering the generated souvenir documenter after a first delivery.

16. The souvenir generation method of claim 15, comprising:
accessing and modifying the customization and operation data associated with a specific previously generated souvenir document from the souvenir repository; and
generating and delivering the associated modified souvenir document.

17. The souvenir generation method of claim 11, wherein the generated souvenir document is a flight souvenir document which is associated with a single flight for a single passenger.

18. The souvenir generation method of claim 11, wherein the generated souvenir document is a trip souvenir document which is associated with a trip for a single passenger.

19. The souvenir generation method of claim 11, wherein the generated souvenir document is a group souvenir document which is associated with a group of persons.
